# EUROPÄISCHE PATENTSCHRIFT

(11) **EP 3 325 298 B1**
(45) Veröffentlichungstag und Bekanntmachung des Hinweises auf die Patenterteilung: **25.11.2020**
(21) Anmeldenummer: 16739510.2
(22) Anmeldetag: 19.07.2016
(51) Int. Cl.: B60J 10/242, B60J 10/248, B60J 10/35, B60J 10/50

(54) **EXTRUDIERTER DICHTUNGSSTRANG MIT ENTLÜFTUNGSÖFFNUNGEN**
EXTRUDED SEALING STRIP WITH VENTING OPENINGS
BOUDIN D'ÉTANCHÉITÉ EXTRUDÉ COMPORTANT DES OUVERTURES DE VENTILATION

(30) Priorität: 20.07.2015 DE 102015111722
(43) Veröffentlichungstag der Anmeldung: 30.05.2018
(73) Patentinhaber: CQLT SaarGummi Technologies S.à.r.l., 5544 Remich (LU)
(72) Erfinder: KAST, Chistian, 66683 Merzig-Brotdorf (DE)
(74) Vertreter: Patentanwälte Bernhardt / Wolff Partnerschaft mbB
(86) Internationale Anmeldenummer: PCT/EP2016/067139
(87) Internationale Veröffentlichungsnummer: WO 2017/013098

(56) Entgegenhaltungen:
- EP-A1- 1 138 538
- EP-A1- 2 037 072
- DE-A1-102005 031 172
- JP-A- 2003 236 912
- JP-A- 2009 248 620
- US-A- 3 550 203
- US-A1- 2008 246 304
- US-B1- 6 623 014

## Beschreibung

Die Erfindung betrifft einen extrudierten Dichtungsstrang, insbesondere für die Bildung von Dichtungen an Fahrzeugkarosserien, gemäß Oberbegriff des Anspruchs 1.

Dichtungsstränge solcher Art für die Bildung von Dichtungen an Fahrzeugtüren sind durch Benutzung bekannt. Zur Entlüftung des Dichtungsabschnitts dieser bekannten Dichtungsstränge z.B. beim Schließen einer Fahrzeugtür weisen die Teilräume des Schlauchinnenraums jeweils eigene Entlüftungsöffnungen auf oder es sind die Trennwand in einem Fußbereich durchsetzende Entlüftungsbohrungen gebildet, die mit allen Teilräumen in Strömungsverbindung stehen. In jedem Fall lässt es sich bei Dichtungssträngen mit einem schlauchförmigen Dichtungsabschnitt und einer Trennwand im Schlauchinnenraum nicht vermeiden, dass im Einbauzustand des Dichtungsstrangs Entlüftungsöffnungen sichtbar bleiben.

Dichtungsstränge mit einem schlauchförmigen Dichtungsabschnitt, dessen Innenraum durch Trennwände in mehrere Teilräume unterteilt ist und die mit der Außenumgebung in Verbindung stehende Entlüftungsöffnungen in der Schlauchwand aufweisen gehen aus DE 10 2005 031 172 A1, US 6,623,014 B1 sowie der EP 1 138 538 A1 hervor. Die schlauchförmigen Dichtungsabschnitte dieser bekannten Dichtungsstränge weisen einen näherungsweise kreisrunden Querschnitt auf, wobei Teilräume durch diametral verlaufende Trennwände gebildet sind. Gegebenenfalls über Luftdurchgänge in den Trennwänden stehen sämtliche Teilräume über Auslassöffnungen in der Schlauchwand mit der Außenumgebung in Verbindung. Aus JP 2009 248620 A ist ein Dichtungsstrang bekannt, bei welchem ein schlauchförmiger Dichtungsabschnitt eine Sichelform aufweist und die eine Trennwand den sichelförmigen Innenraum im Abstand von der Sichelspitze durchquert. In der Trennwand sind in Stranglängsrichtung zueinander im Abstand und im Abstand zu der Schlauchwand Durchgänge zur Bildung von Strömungsverbindungen zwischen den Teilräumen vorgesehen.

Gemäß vorliegender Erfindung wird ein Dichtungsstrang gemäß Oberbegriff des Anspruchs 1 vorteilhaft dadurch weitergebildet, dass die Durchgänge in der Trennwand im Zuge der Extrusion durch vorübergehende Variation des Extrusionswerkzeugs erzeugt sind.

Durch die erfindungsgemäßen Strömungsdurchgänge in der Trennwand lässt sich der Dichtungsabschnitt allein über die nur in einen der Teilräume einmündenden Öffnungen des Dichtungsstrangs entlüften. Weitere der Entlüftung des Schlauchinnenraums dienende Öffnungen, d.h. die Durchgänge in der Trennwand, sind nicht sichtbar. Das Erscheinungsbild der Durchgänge in der Trennwand braucht daher nicht solchen Qualitätsanforderungen zu genügen, wie sie für Entlüftungsöffnungen im Sichtbereich bestehen.

In einer vorteilhaften Ausführungsform der Erfindung sind die in der Schlauchwand vorgesehenen Entlüftungsöffnungen im Einbauzustand des Dichtungsstrangs zudem verdeckt angeordnet.

Bei den Entlüftungsöffnungen, die insbesondere entlang ein und derselben Mantellinie des schlauchförmigen Dichtungsabschnitts abgeordnet sind, handelt es sich vorzugsweise um die einzigen in der Schlauchwand des Dichtungsabschnitts gebildeten Öffnungen. Sowohl die Öffnungen in der Schlauchwand als auch die Durchgänge in der Trennwand befinden sich vorzugsweise bezogen auf den Strangquerschnitt jeweils in der gleichen Position.

In einer besonders bevorzugten Ausführungsform der Erfindung sind die Entlüftungsöffnungen in der Schlauchwand und die Durchgänge in der Trennwand in Stranglängsrichtung zueinander versetzt angeordnet. Vorteilhaft ist durch diese Maßnahme die Schalldurchlässigkeit des Dichtungsstrangs merklich verringert.

Ferner können die Entlüftungsöffnungen und Durchgänge in Bezug zueinander so angeordnet sein, dass die Achsen der Öffnungen und die Achsen der Durchgänge im Winkel zueinander stehen.

Vorzugsweise sind die Entlüftungsöffnungen und/oder Durchgänge unter Vermeidung im Schlauchinnenraum verbleibender Bohrungsrückstände hergestellt. Pfropfen bildende Ansammlungen von Rückständen können sich dann nicht bilden und der Dichtungsstrang lässt sich vorteilhaft zur Bildung von Dichtungen als Endlosstrang verarbeiten.

Bei den Entlüftungsöffnungen in der Schlauchwand handelt es sich vorzugsweise um Öffnungen, die durch variable Extrusion im Extrusionswerkzeug oder unter Materialverdrängung oder Materialabführung unmittelbar hinter dem Extrusionswerkzeug hergestellt sind. Zur Herstellung der Entlüftungsöffnungen könnte ferner ein Laserstrahl von außen auf den extrudierten Strang gerichtet werden.

Die Erfindung wird nachfolgend anhand eines Ausführungsbeispiels und der beiliegenden, sich auf dieses Ausführungsbeispiel beziehenden Zeichnungen weiter erläutert. Es zeigen:
- Fig. 1: einen Dichtungsstrang nach der Erfindung, und
- Fig. 2: verschiedene Ausführungsformen von Dichtungssträngen nach dem Stand der Technik.

Ein extrudierter Dichtungsstrang aus Elastomermaterial zur Bildung einer Dichtung an einer Fahrzeugtür weist einen schlauchförmigen Dichtungsabschnitt 1 mit einer Schlauchwand 18 sowie einen Befestigungsabschnitt 2 zur Befestigung des Dichtungsstrangs an einem Flansch 3 einer (im Übrigen nicht gezeigten) Fahrzeugkarosserie auf. In dem hier angeführten Beispiel ist der Dichtungsstrang über ein doppeltklebendes Klebeband 4 mit dem Flansch 3 verbunden. Der Befestigungsabschnitt 2 umfasst ferner eine Sichtschutzlippe 5.

Der schlauchförmige, die eigentliche Dichtfunktion ausübende Dichtungsabschnitt 1 umfasst eine innere Trennwand 7, die den Schlauchinnenraum 8 des Dichtungsabschnitts 1 in Teilräume 9 und 10 unterteilt. Der Dichtungsabschnitt 1 weist in dem gezeigten Beispiel eine Sichelform auf, die dafür sorgt, dass bei der Verklebung des Dichtungsstrangs mit dem Flansch 3 ein Wandabschnitt 11 der Schlauchwand 18 einknickt und über die Trennwand 7 und den eingeknickten Wandabschnitt 11 vorteilhaft eine hohe Presskraft auf die Klebefläche übertragen werden kann.

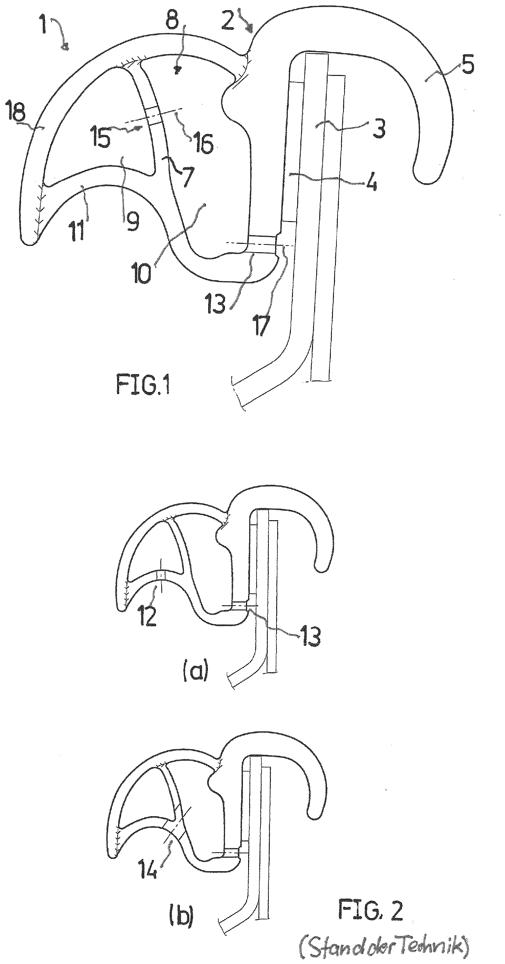

Wenn bei obengenannter Verklebung oder später beim Schließen der Fahrzeugtür der Dichtungsabschnitt 1 zusammengedrückt wird, bedarf es einer Entlüftung des Schlauchinnenraums 8. Gemäß Fig. 2a weist jeder der Teilräume 9,10 des Schlauchinnenraums 8 eigene, in Stranglängsrichtung zueinander im Abstand angeordnete Entlüftungsöffnungen 12 und 13 auf, von denen die Entlüftungsöffnungen 13 im Einbauzustand des Dichtungsstrangs verdeckt und unsichtbar angeordnet sind. Gemäß Fig. 2b sind Entlüftungsbohrungen 14 gebildet, die sowohl in den Teilraum 9 als auch in den Teilraum 10 einmünden. Die Entlüftungsöffnungen 12 und 14 bleiben im Einbauzustand des Dichtungsstrangs sichtbar. Im Schlauchinnenraum verbleiben ggf. Bohrungsrückstände.

Bei dem in Fig. 1 gezeigten Dichtungsstrang sind im Einbauzustand keine Entlüftungsöffnungen zu sehen, indem die Trennwand 7 in Stranglängsrichtung zueinander im Abstand angeordnete Durchgänge 15 mit einer Durchgangsachse 16 aufweist. Beim Komprimieren des Dichtungsabschnitts 1 entlüftet sich der Teilraum 9 über den Durchgang 15 zunächst in den Teilraum 10 hinein und der Schlauchinnenraum 8 dann insgesamt über die im Einbauzustand unsichtbaren Öffnungen 13, deren Achsen 17 im Winkel zu den Durchgangsachsen 16 stehen.

Die Durchgänge 15 sind im Zuge der Extrusion des Dichtungsstrangs hergestellt. Hierzu wurde innerhalb des Extrusionswerkzeugs der für die Bildung der Trennwand 7 maßgebliche Spalt in Zeitabständen kurzfristig lokal gesperrt.
Die Entlüftungsöffnungen 13 sind in dem gezeigten Beispiel durch Materialverdrängung oder Materialabsaugung in Strömungsrichtung unmittelbar hinter dem Extrusionswerkzeug hergestellt.

Die auf die vorangehend beschriebene Art und Weise erzeugten Durchgänge und Entlüftungsöffnungen weisen keine klar konturierten Öffnungsrändern auf, so dass die Anwendung dieser Verfahren für die Herstellung von Öffnungen, die in einem Sichtbereich liegen, nicht in Betracht käme. Vorteilhaft können durch diese Verfahren jedoch von Bohrungsrückständen freie Öffnungen erzeugt werden. Der in Fig. 1 gezeigte Dichtungsstrang eignet sich daher besonders zur Verarbeitung als Endlosstrang.

## Patentansprüche

1. Extrudierter Dichtungsstrang, insbesondere für die Bildung von Dichtungen an Fahrzeugkarosserien, mit einem schlauchförmigen Dichtungsabschnitt (1), dessen Innenraum (8) durch wenigstens eine sich in Stranglängsrichtung erstreckende Trennwand (7) in Teilräume (9,10) unterteilt ist und in dessen Schlauchwand (18) in Stranglängsrichtung zueinander im Abstand Öffnungen (13) zur Entlüftung des Schlauchinnenraums (8) bei Kompression des Dichtungsabschnitts (1) gebildet sind,
wobei die Entlüftungsöffnungen (13) sämtlich in denselben Teilraum (10) einmünden und dass in der Trennwand (7) in Stranglängsrichtung zueinander im Abstand Durchgänge (15) zur Bildung von Strömungsverbindungen zwischen den Teilräumen (9,10) vorgesehen sind,
**dadurch gekennzeichnet,**
**dass** die Durchgänge (15) in der Trennwand (7) im Zuge der Extrusion durch vorübergehende Variation des Extrusionswerkzeugs erzeugt sind.

2. Dichtungsstrang nach Anspruch 1,
**dadurch gekennzeichnet,**
**dass** es sich bei den Entlüftungsöffnungen (13) um die einzigen in der Schlauchwand (18) des Dichtungsabschnitts (1) gebildeten Öffnungen handelt.

3. Dichtungsstrang nach Anspruch 1 oder 2,
**dadurch gekennzeichnet,**
**dass** die Entlüftungsöffnungen (13) und/oder die Durchgänge (15) bezogen auf den Strangquerschnitt jeweils in der gleichen Position angeordnet sind.

4. Dichtungsstrang nach einem der Ansprüche 1 bis 3,
**dadurch gekennzeichnet,**
**dass** die Entlüftungsöffnungen (13) und die Durchgänge (15) in Stranglängsrichtung zueinander versetzt angeordnet sind.

5. Dichtungsstrang nach einem der Ansprüche 1 bis 4,
**dadurch gekennzeichnet,**
**dass** die Achsen (17) der Entlüftungsöffnungen (13) und die Achsen (16) der Durchgänge (15) im Winkel zueinander stehen.

6. Dichtungsstrang nach einem der Ansprüche 1 bis 5,
**dadurch gekennzeichnet,**
**dass** die Entlüftungsöffnungen (13) in der Schlauchwand (18) im Einbauzustand des Dichtungsstrangs uneinsehbar verdeckt sind.

7. Dichtungsstrang nach einem der Ansprüche 1 bis 6,
**dadurch gekennzeichnet,**
**dass** die Entlüftungsöffnungen (13) und/oder die Durchgänge (15) unter Vermeidung im Schlauchinnenraum (8) verbleibender Rückstände hergestellt sind.

8. Dichtungsstrang nach einem der Ansprüche 1 bis 7,
**dadurch gekennzeichnet,**
**dass** die Öffnungen (13) in der Schlauchwand (18) unmittelbar im Anschluss an die Extrusion unter Materialverdrängung von der Außenseite oder unter Materialabführung nach der Außenseite hergestellt sind.

9. Dichtungsstrang nach einem der Ansprüche 1 bis 8,
**dadurch gekennzeichnet,**
**dass** der Dichtungsstrang zur Bildung von Dichtungen unter Verarbeitung als Endlosstrang vorgesehen ist.

## Claims

1. Extruded sealing strip, in particular for forming seals on vehicle bodies, having a tube-form sealing portion (1) of which the interior space (8) is subdivided into sub-spaces (9, 10) by at least one partition wall (7) extending in the longitudinal direction of the strip, openings (13) being formed in the tube wall (18) of said sealing portion, at a distance apart from one another in the longitudinal direction of the strip, for the purpose of venting the interior space (8) of the tube when the sealing portion (1) is compressed,
wherein the venting openings (13) all open out into the same sub-space (10) and through-passages (15) are provided in the partition wall (7), at a distance apart from one another in the longitudinal direction of the strip, for the purpose of forming flow connections between the sub-spaces (9, 10),
**characterized**
**in that** the through-passages (15) in the partition wall (7) are produced during the extrusion process as a result of the temporary variation of the extrusion die.

2. Sealing strip according to Claim 1,
**characterized**
**in that** the venting openings (13) are the only openings formed in the tube wall (18) of the sealing portion (1).

3. Sealing strip according to Claim 1 or 2,
**characterized**
**in that**, as seen in relation to the cross section of the strip, the venting openings (13) and/or the through-passages (15) are arranged in each case in the same position.

4. Sealing strip according to one of Claims 1 to 3,
**characterized**
**in that** venting openings (13) and the through-passages (15) are offset in relation to one another in the longitudinal direction of the strip.

5. Sealing strip according to one of Claims 1 to 4,
**characterized**
**in that** the axes (17) of the venting openings (13) and the axes (16) of the through-passages (15) are at an angle in relation to one another.

6. Sealing strip according to one of Claims 1 to 5,
**characterized**
**in that**, when the sealing strip is in the installed state, the venting openings (13) in the tube wall (18) are concealed from view.

7. Sealing strip according to one of Claims 1 to 6,
**characterized**
**in that** the venting openings (13) and/or the through-passages (15) are produced in such a manner as to avoid residues remaining in the interior space (8) of the tube.

8. Sealing strip according to one of Claims 1 to 7,
**characterized**
**in that** the openings (13) in the tube wall (18) are produced immediately following the extrusion process, with material being displaced from the outside or with material being removed towards the outside.

9. Sealing strip according to one of Claims 1 to 8,
**characterized**
**in that** the sealing strip is provided to form seals, and is processed in the form of an endless strip.

## Revendications

1. Profilé d'étanchéité extrudé, en particulier pour la formation de joints d'étanchéité au niveau de carrosseries de véhicules, présentant une section d'étanchéité (1) en forme de tuyau, dont l'espace interne (8) est divisé en espaces partiels (9, 10) par au moins une paroi de séparation (7) s'étendant dans la direction longitudinale du profilé et dont la paroi (18) de tuyau présente des ouvertures (13) formées à une certaine distance les unes des autres dans la direction longitudinale du profilé pour l'évacuation d'air de l'espace interne (8) du tuyau lors de la compression de la section d'étanchéité (1), les ouvertures d'évacuation d'air (13) débouchant toutes dans le même espace partiel (10) et des passages (15) pour la formation de liaisons d'écoulement entre les espaces partiels (9, 10) étant situés dans la paroi de séparation (7) à une certaine distance les uns des autres dans la direction longitudinale du profilé, **caractérisé en ce que** les passages (15) dans la paroi de séparation (7) sont produits au cours de l'extrusion par une variation transitoire de l'outil d'extrusion.

2. Profilé d'étanchéité selon la revendication 1, **caractérisé en ce que** les ouvertures d'évacuation d'air (13) sont les seules ouvertures formées dans la paroi (18) de tuyau de la section d'étanchéité (1).

3. Profilé d'étanchéité selon la revendication 1 ou 2, **caractérisé en ce que** les ouvertures d'évacuation d'air (13) et/ou les passages (15) sont à chaque fois agencés dans la même position par rapport à la section transversale du profilé.

4. Profilé d'étanchéité selon l'une quelconque des revendications 1 à 3, **caractérisé en ce que** les ouvertures d'évacuation d'air (13) et les passages (15) sont agencés de manière décalée les uns par rapport aux autres dans la direction longitudinale du profilé.

5. Profilé d'étanchéité selon l'une quelconque des revendications 1 à 4, **caractérisé en ce que** les axes (17) des ouvertures d'évacuation d'air (13) et les axes (16) des passages (15) forment un angle les uns avec les autres.

6. Profilé d'étanchéité selon l'une quelconque des revendications 1 à 5, **caractérisé en ce que** les ouvertures d'évacuation d'air (13) dans la paroi (18) du tuyau, dans l'état de montage du profilé d'étanchéité, sont recouvertes de façon à être invisibles.

7. Profilé d'étanchéité selon l'une quelconque des revendications 1 à 6, **caractérisé en ce que** les ouvertures d'évacuation d'air (13) et/ou les passages (15) sont réalisés tout en évitant des résidus restant dans l'espace interne (8) du tuyau.

8. Profilé d'étanchéité selon l'une quelconque des revendications 1 à 7, **caractérisé en ce que** les ouvertures (13) dans la paroi (18) du tuyau sont réalisées immédiatement après l'extrusion tout en refoulant le matériau du côté externe ou en évacuant du matériau vers le côté externe.

9. Profilé d'étanchéité selon l'une quelconque des revendications 1 à 8, **caractérisé en ce que** le profilé d'étanchéité est destiné à la formation de joints d'étanchéité tout en le mettant en œuvre en tant que profilé sans fin.
